# EUROPÄISCHE PATENTANMELDUNG

(11) **EP 2 140 995 A1**
(43) Veröffentlichungstag der Anmeldung: **06.01.2010**
(21) Anmeldenummer: 08011995.1
(22) Anmeldetag: 03.07.2008
(51) Int. Cl.: B29C 45/26, B29C 45/44, B29C 45/73

(54) **Verfahren zur Kühlung eines Spreizkerns einer Spritzgussform**

(71) Anmelder: Ifw Manfred Otto GmbH, 4563 Micheldorf (AT)
(72) Erfinder: Kastner, Friedrich, DI Dr., 4710 Grießkirchen (AT); Vorauer, Helmut, 4560 Kirchdorf (AT); Ebner, Josef, Ing., 4563 Micheldorf (AT)
(74) Vertreter: Landgraf, Elvira

(57) **Zusammenfassung**

Verfahren zur Kühlung der Segmente eines Spreizkerns einer Spritzgießform, **dadurch gekennzeichnet, dass** der Ziehring und die Segmente mit Kühlkanälen versehen werden und ein Kühlfluid durch diese Kühlkanäle geleitet wird.

## Beschreibung

Die Erfindung betrifft ein Verfahren und eine Vorrichtung zur Kühlung eines Spreizkerns einer Spritzgießform.

Als Spreizkern bezeichnet man den Formkern einer Spritzgießform, der im Bereich der Ringnut oder z.b einer Hinterschneidung des Spritzlings durch Segmente gebildet ist, die so weit einfahrbar sind, dass der Formkern in Axialrichtung aus der Ringnut oder Hinterschneidung bewegt werden kann. Die Ein- und Ausfahrbewegung der Segmente z.B. wird durch Verdrehen der Steuerwelle und Verschiebung wenigstens eines von einem Segment abstehenden Zapfens in einem Führungsschlitz bewirkt. In einer weiteren Ausführungsform können die Segemente, die über einem Schaft in einem Segmethaltering befestigt sind, über einen Ziehring der z.B. aus AMCO Bronze besteht, gesteuert werden.
Die Bewegung des Ziehrings erfolgt über mechanische, hydraulische oder pneumatische Steuerungselemente

Derartige Spreizkerne sind beispielsweise aus DE 27 52 672 A oder DE 93 08 603 U1 bekannt.

Die Kühlung der Spreizkernsegmente ist relativ schwierig. Bisher wird die Kühlung insbesondere nur durch thermischen Kontakt mit einem Ziehring gekühlt, der wiederum nur in leichten thermischen Kontakt mit einem gekühlten Kernelement steht.

Da diese Komponenten allerdings beweglich gelagert sind, ist oft nur ein schlechter thermischer Kontakt möglich. Besonders im Betrieb heizen sich die Komponenten aufgrund der unterschiedlichen Wärmeleitfähigkeit der Materialien unterschiedlich auf, und dehnen sich aufgrund der unterschiedlichen thermischen Ausdehungskoeffizienten auch unterschiedlich aus was oft zu einem Verlust des thermischen Kontakts führt und das Aufheizen verstärkt. So dehnt sich z.B. der Ziehring aus und wird, falls keine Ziehringkühlung vorgesehen ist, somit auch nicht mehr von der Kühlung des Kerns gekühlt.
Dies führt neben mechanischen Problemen, beispielsweise Verklemmen der Segmente auch zu wesentlich längeren Zykluszeiten, da eine Entformung des Spritzgußstückes erst nach ausreichender Abkühlung der Form eingeleitet werden kann.

Die Segmente sind üblicherweise aus einem höher legierten Stahl, z.B. 1.2316 gefertigt, dieses Material ist ein sehr schlechter Wärmeleiter. Der Ziehring aus kann beispielsweise aus Bronze (AMCO) gefertigt sein. Dieses Material leitet prinzipiell Wärme besser. Allerdings reicht die unterschiedliche Wärmeleitfähigkeit gerade bei Werkzeugen mit größeren Segmenten nicht aus um die Wärme ausreichend ableiten. Die Folge ist starke Ausdehnung und oft mechanische Probleme. (Blockieren der Segmente). Darüber hinaus ergeben sich aber auch relativ lange Zykluszeiten.

Aufgabe der Erfindung war es ein Verfahren zur Kühlung der Segmente eines Spreizkerns bereitzustellen, um eine raschere Abkühlung und damit geringere Zykluszeiten zu gewährleisten.

Gegenstand der Erfindung ist daher ein Verfahren zur Kühlung der Segmente eines Spreizkerns einer Spritzgießform, dadurch gekennzeichnet, dass der Ziehring und die Segmente mit Kühlkanälen versehen werden und ein Kühlfluid durch diese Kühlkanäle geleitet wird.

Zusätzlich können die Segmente aus einem Material mit besseren Wärmeleiteigenschaften gefertigt werden oder mit Wärmeleitseelen oder Stiften (Kupfer, Heatpipes, Sandwichkonstruktionen aus unterschiedlichen Metallen oder Legierungen) versehen werden.

Die Kühlkanäle können in den Ziehkern bzw. die Segmente durch Bohren, Vakuumlöten, Lasercusen und dergleichen hergestellt werden oder bereits beim Guss des Ziehrings bzw. der Segmente eingearbeitet werden.

Der Ziehring besteht konstruktionsbedingt aus einem besser wärmeleitfähigen Material (Bronze), aber auch hier kann die Wärmeverteilung z.B. durch Wärmeleitstifte etc. verbessert werden. Der gekühlte Ziehring verbessert vor allem auch das mechanische Verhalten, das Klemmen der Segmente wird dadurch weitgehend verhindert.
Als Kühlfluid kommen beispielsweise Gase oder komprimierte Gase, wie Luft, Stickstoff, CO₂ und dergleichen in Frage. Ferner können auch Kühlflüssigkeiten, als Kühlfluid verwendet werden.

Dabei wird vorzugsweise ein gasförmiges vorgekühltes (z.B. an einem Kühlwasserkereislauf im Werkzeug oder einem Wärmetauscher) Medium (Luft, Stickstoff, CO2,...) z.B. durch den Kern geleitet und z.B. durch eine Ringnut außen am Kern die gemeinsam mit dem Ziehring einen Verteilerkreis bildet durch Löcher im Ziehring auf die Segmente geblasen. Der Verteilerkreis kann aber auch bereits im Kern oder in den Ziehring integriert oder z.B mit der Wasserkühlung kombiniert sein.

Durch die Bohrungen im Ziehring oder anderen Komponenten im Spreizkern wird das Gas von hinten auf die Segmente geblasenDie Oberfläche der Segmente kann z.B. durch Kühlrippen vergrößert sein. Zusätzlich können Bohrungen in den Segmenten so angeordnet sein, dass sie mit einem Teil der Löcher im Ziehring überlappen. Im geschlossenen Zustand bläst dann das Kühlmedium durch die Segmente.

Die Bohrungen können auch so ausgeführt sein, dass ein komprimiertes Medium beim Austritt expandiert und somit noch tiefere Mediumtemperaturen erzeugt werden. Dies vergrößert den Temperaturunterschied und verbessert somit die Kühlung.

Natürlich kann diese Gaskühlung auch an anderen Stellen im Werkzeug integriert werden.

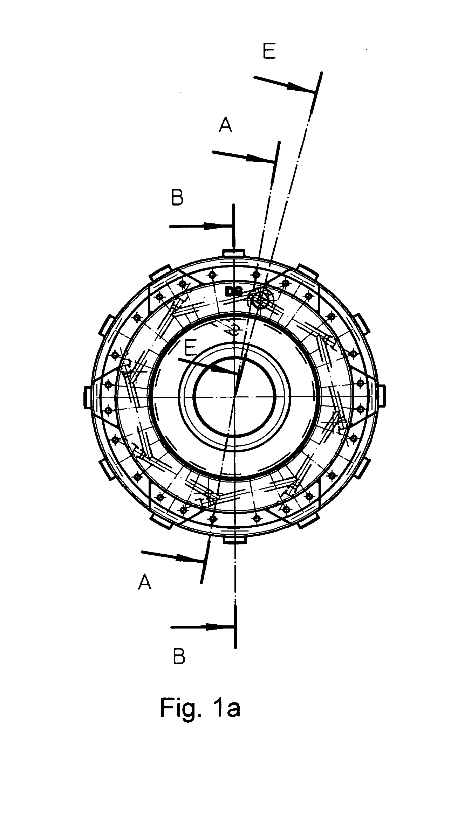

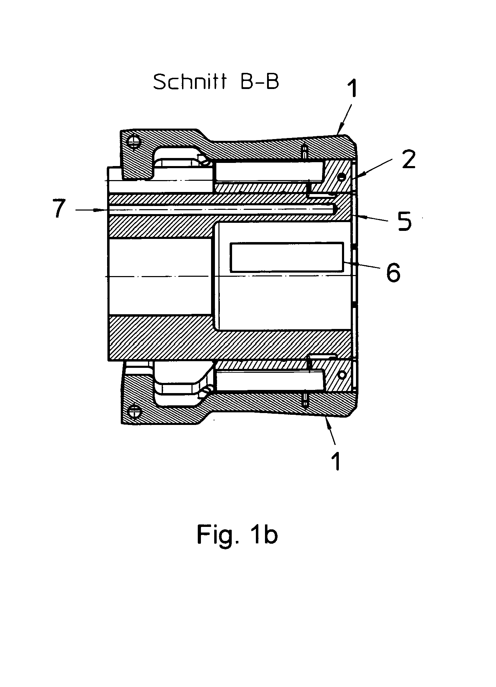

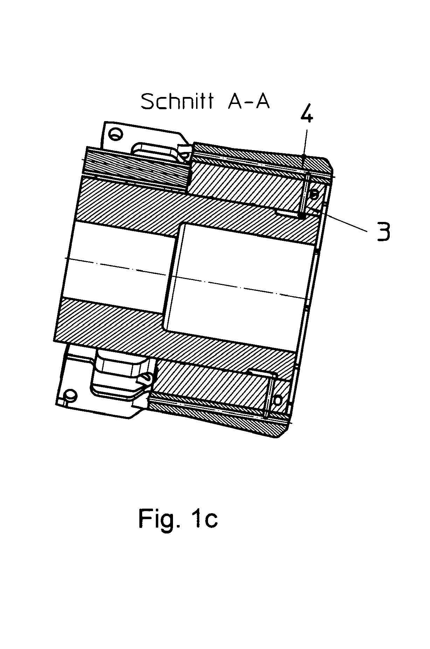

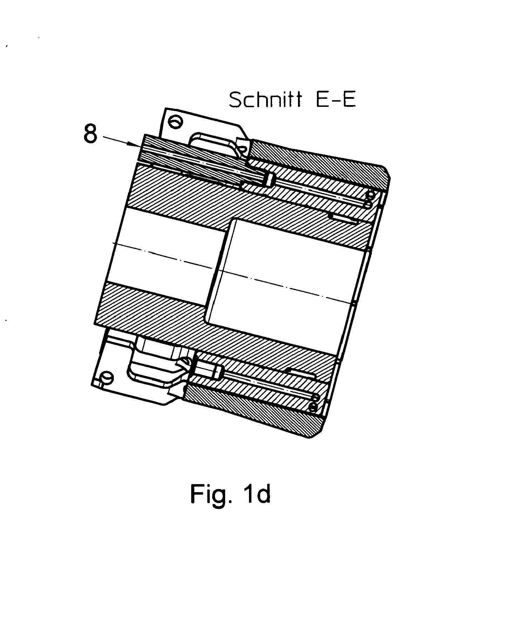

In Fig. 1 a bis d ist ein erfindungsgemäßer Spreizkern mit entsprechenden Ausnehmungen zum Einleiten eines Kühlfluids dargestellt

### Darin bedeuten

1 das (die) Segment(e)
2 den Ziehring
3 die Ausnehmungen im Ziehring
4 die Ausnehmungen in den Segmenten
5 den Kern
6 die Kernkühlung
7 einen Druckluftanschluss
8 den Anschluss für die Wasserkühlung des Ziehrings

Im durch die Figur 1 beschriebenen Beispiel wird der Ziehring wassergekühlt. Über eine Ausnehmung im Kern wird Druckluft am Kühlwasser vorbeigeführt und über einen Ring, der aus einer Nut im Kern und Ziehring bei geschlossenem Werkzeug gebildet wird über Löcher im Ziehring auf die Segmente geblasen und durch Bohrungen in den Segmenten durch die Segmente geblasen.

## Patentansprüche

1. Verfahren zur Kühlung der Segmente eines Spreizkerns einer Spritzgießform, **dadurch gekennzeichnet, dass** der Ziehring und die Segmente mit Kühlkanälen versehen werden und ein Kühlfluid durch diese Kühlkanäle geleitet wird.

2. Verfahren nach Anspruch 1, **dadurch gekennzeichnet, dass** das Kühlfluid ein Gas ein komprimiertes Gas oder eine Flüssigkeit ist.

3. Verfahren nach einem der Ansprüche 1 bis 2, dass als Kühlfluide Luft, Stickstoff CO2 oder Wasser eingesetzt wird.

4. Verfahren nach einem der Ansprüche 1 bis 3, **dadurch gekennzeichnet, dass** eine Kombination der Kühlfluide eingesetzt wird.

5. Verfahren nach einem der Ansprüche 1 bis 4, **dadurch gekennzeichnet, dass** die Kühlkanäle durch Bohren, Vakuumlöten, Lasercusen oder durch direkte Einbringung im Gussverfahren eingebracht werden.

6. Verfahren nach einem der Ansprüche 1 bis 5, **dadurch gekennzeichnet, dass** die Kühloberfläche der Segmente durch Kühlrippen vergrößert ist.
